Europäisches Patentamt

European Patent Office

Office européen des brevets

(11) Veröffentlichungsnummer: **0 302 368**
**A2**

(19)

(12) **EUROPÄISCHE PATENTANMELDUNG**

(21) Anmeldenummer: 88112075.2

(22) Anmeldetag: 27.07.88

(51) Int. Cl.⁴: **C01B 13/32 , C01F 7/04 , C01B 33/32 , C01G 23/00 , C01G 25/00 , C01F 7/16 , C01B 33/24**

(30) Priorität: 04.08.87 DE 3725740

(43) Veröffentlichungstag der Anmeldung:
08.02.89 Patentblatt 89/06

(84) Benannte Vertragsstaaten:
**AT BE CH FR GB LI SE**

(71) Anmelder: **Kernforschungszentrum Karlsruhe GmbH**
**Weberstrasse 5 Postfach 3640**
**D-7500 Karlsruhe 1(DE)**

(72) Erfinder: **Wedemeyer, Horst, Dr.**
**Kopernikusstrasse 13**
**D-7515 Linkenheim(DE)**
Erfinder: **Vollath, Dieter, Dr.**
**Primelweg 3**
**D-7513 Stutensee(DE)** -
Erfinder: **Günther, Elmar**
**Albert-Kretz-Strasse 21**
**D-7513 Stutensee(DE)**

(54) **Verfahren zur Herstellung sinterfähiger Pulver für binäre und multinäre, keramische Oxidwerkstoffe.**

(57) Die Erfindung betrifft ein Verfahren zur Herstellung sinterfähiger Pulver für binäre und multinäre, keramische Oxidwerkstoffe.

Nach dem erfindungsgemäßen Verfahren lassen sich oxidkeramische Produkte gewinnen, die wegen ihres feinteiligen Charakters schon nach angemessen niedrigen Kalzinationstemperaturen zur pulvermetallurgischen Formgebung besonders geeignet sind. Im Verlaufe des Herstellungsverfahrens werden in alkoholischer Suspension aus den jeweiligen Hydroxidgemischen organische Phasen gebildet, die zum Teil erst bei höheren Temperaturen zerfallen. Hierdurch wird das Aufschmelzen der Hydroxide mit niedrigen Schmelzpunkten unterdrückt, wodurch das Aufmahlen der Pulver vermieden wird, ohne daß diese ihre Sinterfähigkeit einbüßen. Wie an einer Reihe von Beispielen gezeigt wurde, ist das vorgestellte Verfahren nicht nur auf die Herstellung einiger weniger Produkte beschränkt, sondern auf den gesamten Bereich der binären und multinären Oxidkeramik anzuwenden. Überdies zeichnet sich das Verfahren durch einfache, schadstofffreie Verfahrensschritte aus.

EP 0 302 368 A2

## Verfahren zur Herstellung sinterfähiger Pulver für binäre und multinäre, keramische Oxidwerkstoffe

Die Erfindung betrifft ein Verfahren zur Herstellung sinterfähiger Pulver für binäre und multinäre, keramische Oxidwerkstoffe, bei welchem die Ausgangssubstanzen in einer alkoholischen Flüssigkeit gelöst und/oder suspendiert werden, bei erhöhter Temperatur zur Bildung des keramischen Pulvers aus den Ausgangssubstanzen zur Reaktion gebracht werden und die alkoholische Flüssigkeit entfernt wird.

Im Rahmen der Entwicklung technologischer Oxidwerkstoffe gewinnt die Herstellung sinterfähiger Keramikpulver zunehmend an Bedeutung. Hierbei sind nicht nur die reinen Oxide wie $Al_2O_3$, $ZrO_2$, usw. sondern auch binäre und multinäre Oxidwerkstoffe wie 3 $Al_2O_3$.2 $SiO_2$ (Mullit), 3 $MgO.Al_2O$ 3 $SiO_2$ (Pyrop), usw. von Interesse. Ebenso gehören hierzu Silikate, Germanate, Aluminate, Chromate, Titanate, Zirkonate, usw.; Werkstoffe, die sich durch hohe Festigkeit, einen angemessen hohen Schmelzpunkt und/oder andere interessante thermophysikalische Eigenschaften auszeichnen.

Die Herstellung der oxidkeramischen Werkstoffe erfolgt im allgemeinen durch Formgebung (z. B. Pressen) und Sintern geeigneter Ausgangspulver. Hierbei spielt die Sinterfähigkeit der Pulver eine entscheidende Rolle. Da überlicherweise die keramischen Substanzen durch Reaktionsglühungen der gemeinsam gemahlenen Ausgangsoxide dargestellt werden, - ein Prozeß, der gelegentlich mehrfach wiederholt werden muß -sind die so gewonnen Pulver im allgemeinen nicht sinterfähig. Hier sind lang anhaltende Mahlprozesse notwendig, um den Pulvern eine gewisse Sinteraktivität zu verleihen. Häufig muß jedoch auf die Methoden der Heißpreßtechnologie zurückgegriffen werden.

Aufgabe der Erfindung ist es, ein Verfahren zu schaffen, das die genannten Nachteile vermeidet und mit dem insbesondere gut sinterfähige Pulver erzeugt werden können.

Das Verfahren soll bei niedrigen Temperaturen durchgeführt werden können, damit die erzeugten Pulver ihre Sinterfähigkeit behalten, so daß auf langwierige, meist nicht reproduzierbare Mahlprozesse verzichtet werden kann.

Weiterhin sollen bei diesem Verfahren keine umweltschädlichen Abgase freigesetzt werden.

Erfindungsgemäß wird die Aufgabe dadurch gelöst, daß

a) als Ausgangssubstanzen entweder

aa) eine Kombination mindestens eines, in Wasser sauer reagierenden Stoffes mit mindestens einem in Wasser alkalisch reagierenden Reaktionspartner oder

ab) eine Kombination mindestens eines amphoteren Stoffes mit mindestens einem in Wasser alkalisch reagierenden Reaktionspartner oder

ac) eine Kombination mindestens eines in Wasser sauer reagierenden Stoffes mit mindestens einem amphoteren Reaktionspartner verwendet wird,

b) mindestens einer der Stoffe oder der Reaktionspartner in einer solchen Kombination mit mindestens einem der in der alkoholischen Flüssigkeit vorhandenen Alkohole verestert wird und mit dem anderen Reaktionspartner eine Verbindung eingeht, wonach die entstandene Verbindung in der Flüssigkeit suspendiert vorliegt und

c) die Verbindung durch Wärmezufuhr zur Suspension sowohl von der Flüssigkeit getrennt als auch in das keramische Pulver oder ein Vorprodukt überführt wird.

Eine besondere vorteilhafte Ausgestaltung des Verfahrens besteht darin, daß die Abtrennung der Verbindung von der Flüssigkeit und die Überführung in das keramische Pulver oder in ein festes Vorprodukt gleichzeitig und durch Versprühen erfolgt.

Weiterhin ist es besonders vorteilhaft, wenn

a) als alkoholische Flüssigkeit Methanol verwendet wird und

b) nach Bildung der Verbindung des Methanol unter gleichzeitiger Wasserzufuhr abdestilliert wird und

c) die entstehende wäßrige Suspension versprüht wird.

Eine weitere, besonders vorteilhafte Ausgestaltung der Erfindung besteht darin, daß die Überführung eines Vorproduktes in das keramische Pulver durch Kalzination der abgetrennten Verbindung unterhalb des Schmelzpunktes des niedrigschmelzenden Reaktionspartners erfolgt.

Das Verfahren beruht auf der Veresterung von Stoffen, die saure Gruppen enthalten, mit Alkoholen.

Ein solcher, saure Gruppen enthaltender Stoff ist beispielsweise "Aerosil", eine spezielle Form des $SiO_2$, das diese sauren Gruppen an der Oberfläche enthält. In Gegenwart basischer Hydroxide werden hierbei organische Phasen gebildet, bei deren Zerfall durch Erhitzen der erzeugten Substanzen entweder unmittelbar schon bei relativ niederen Temperaturen die gewünschten, sinterfähigen Endprodukte gebildet werden oder besonders reaktionsfähige Substanzgemische entstehen, die bei weiterer Temperaturerhöhung zu den gewünschten Endprodukten führen, ohne ihre Sinteraktivität weitgehend zu verlieren. In gleicher Weise werden durch Verwendung amphoterer Hydroxide, wie z. B. $Al(OH)_3$, in entsprechender Weise

2

organische Phasen gebildet, aus denen die Endprodukte als sinterfähige Substanzen erhalten werden.

Die Durchführung des Verfahrens erfolgt mit Hilfe der Methoden der Suspensionstechnologie, wobei die Ausgangsmaterialien in einem stöchiometrischen Ansatz in einem primären Alkohol suspendiert werden und bei erhöhter Temperatur im siedenden Alkohol die Bildung der organischen Phasen abgewartet wird. Aus der so entstandenen Suspension wird durch die Methoden des Sprühtrocknens ein besonders sinterfähiges und meist extrem fließfähiges Pulver erhalten. Aus diesem Pulver, der organischen Phase, wird bei erhöhter Temperatur durch Kalzinieren (z. B. in einem Wirbelbettreaktor) das Endprodukt gewonnen.

Die Bildung der erwähnten organischen Phasen erfolgt umso vollständiger, je basischer der Charakter der eingesetzten Hydroxide ist. Eine besondere Rolle spielt hier wiederum das "Aerosil", da neben der Veresterung der Oberfläche die Struktur des $SiO_2$ durch Einwirkung eines basischen Hydroxids aufgeschlossen werden kann. Hierdurch entstehen die Alkalisilikate, ähnlich wie die Alkalialuminate, -titanate, -zirkonate, usw. während des Kalzinierens bereits bei Temperaturen unterhalb der Schmelzpunkte der jeweiligen Hydroxide.

Ein besonderer Vorteil des Verfahrens besteht darin, daß keine umweltschädlichen Abgase freigesetzt werden.z

Das Trocknen der Suspension bzw. die Pulvergewinnung kann nun auf zwei Wegen geschehen.

- Durch Pulvergewinnung aus der alkoholischen Suspension: Hierbei wird entweder das Methanol abdestilliert oder das Pulver durch Sprühtrocknen erhalten, wobei besonders feinteilige, extrem fließfähige Pulver erhalten werden.

- Durch Umwandeln der alkoholischen in eine wäßrige Suspension und anschließender Pulvergewinnung: Hierbei wird das Methanol unter gleichzeitiger Wasserzuführung abdestilliert, welches möglich ist, da Methanol und Wasser kein azeotropes Gemisch bilden. Hierdurch bleibt die feinteilige Suspension ständig erhalten. Durch Hydrolyse wird ein Teil des basischen Hydroxids aus der organischen Phase freigesetzt. Während des Trocknungsprozesses wird das Hydroxid jedoch wieder chemisch abgebunden. Dieser Verfahrensschritt ist besonders interessant, da hier zum Sprühtrocknen keine vollständig geschlossenen, explosionsgeschützte Anlagen verwendet werden müssen.

Es bleibt darauf hinzuweisen, daß zur Herstellung der alkoholischen Suspension auch andere primäre Alkohole eingesetzt werden können. Wegen der Bildung azeotroper Alkohol/Wasser-Gemische entfällt jedoch dann die Umwandlung der alkoholischen in eine wäßrige Suspension.

Die Erfindung wird im folgenden anhand einiger Durchführungsbeispiele näher erläutert. Die Tabelle 1 enthält eine Übersicht über die hergestellten oxidkeramischen Pulver.

Nach dem erfindungsgemäßen Verfahren wurden die folgenden Verbindungen hergestellt:

$LiAlO_2$;

$Li_2SiO_3$, $Li_4SiO_4$, $LiAlSiO_4$ ((Eukryptit), $Na_4SiO_4$, $K_2SiO_3$;

$Li_2TiO_3$ und $Li_2ZrO_3$.

## Beispiel 1

Herstellung des Lithiumorthosilikats $Li_4SiO_4$

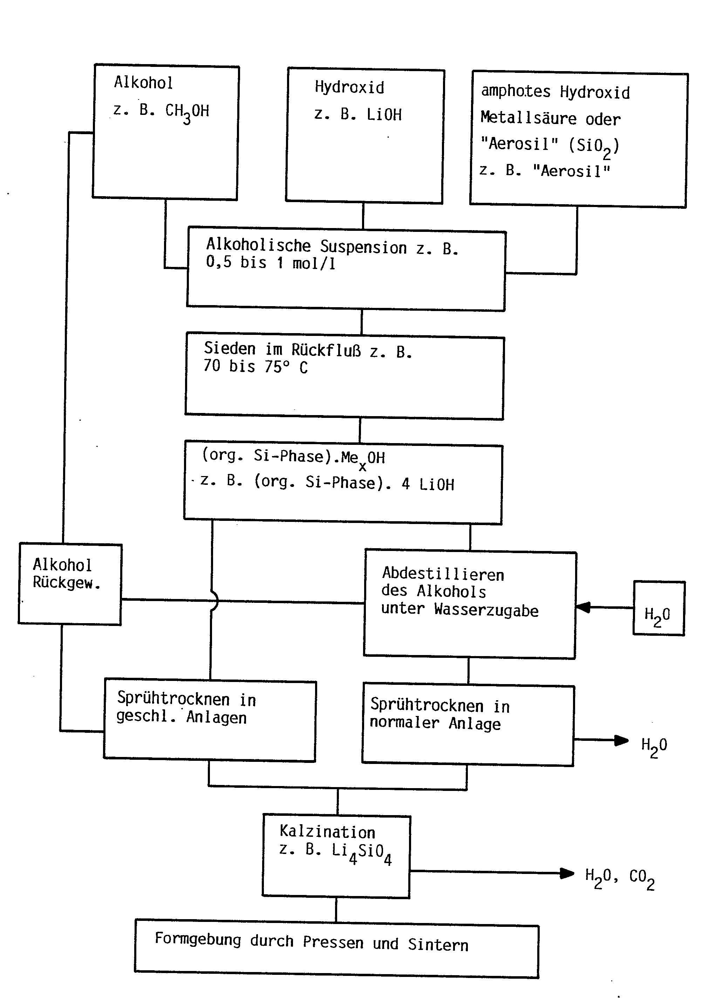

Entsprechend dem Fließschema zur Herstellung keramischer Pulver (siehe Fig. 1) werden ausgehend von einem stöchiometrischen Ansatz 4 Mole LiOH und 1 Mol "Aerosil" ($SiO_2$) in Methanol suspendiert, so daß eine Suspension von 0,5 bis 1 Mol/1 bezogen auf die Verbindung $Li_4SiO_4$ erhalten wird. Diese Mischung wird auf 70° bis 75° C erwärmt und einige Stunden (3 - 5 Std.) im Rückfluß gekocht. Während dieser Zeit entsteht eine sehr feinteilige, milchige Suspension. Hierbei tritt eine Veresterung der Oberfläche des "Aerosils" ein; gleichzeitig wird die Struktur des "Aerosils" aufgeschlossen.

$$4 \; LiOH + SiO_2 + n \; CH_3OH \rightarrow (\text{org. Si-Phase}).4 \; LiOH + m \; CH_3OH.$$

Das Hydroxid liegt hierbei entweder chemisch gebunden in der organischen Si-Phase und/oder adsorbiert an dieser vor. Die Suspension erweist sich als basisch, da durch die Anwesenheit von Wasser (Feuchtigkeit des Alkohols und/oder durch Reaktion gebildetes Wasser) die organische Phase teilweise hydrolysiert wird.

$$(\text{org. Si-Phase}).4 \; LiOH + n \; H_2O \rightleftharpoons (\text{org. Si-Phase}) + 4 \; LiOH.$$

Das gewünschte Orthosilikat, Li₄SiO₄, entsteht nun bei einer nachfolgenden Wärmebehandlung durch Kalzination, des getrockneten Pulvers. Hierbei tritt die Reaktion zum Orthosilikat während der Zersetzung der organischen Phasen ein. Dieses bedeutet, daß auch dann, wenn geringe Anteile von freiem Hydroxid vorliegen, wie es bei dem Verfahrensschritt mit wäßriger Suspension auftritt, die Reaktion zum Orthosilikat noch vor dem Erreichen des Hydroxidschmelzpunktes ($T_M$(LiOH) = 450° C) erfolgt. Hierdurch bleibt das Orthosilikatpulver besonders feinteilig; ein Aufmahlen des Pulvers ist nicht notwendig. Nach dem Kalzinieren erfolgt dann unmittelbar die pulvermetallurgische Formgebung durch Pressen und Sintern.

Beispiel 2

Herstellung von Alkalialuminaten

Zur Darstellung des Lithiumaluminats, LiAlO₂, wurden wasserfreies LiOH und Al(OH)₃ - hergestellt durch Hydrolyse von Aluminium-triisopropylat, (C₃H₇O)₃Al - bzw. AlO(OH) - hergestellt durch Fällung aus einer wäßrigen AlCl₃-Lösung mit NH₄OH - in Methanol suspendiert und für etwa drei Stunden im Rückfluß gekocht. Aus dieser Suspension wurde ein sehr feinteiliges, extrem fließfähiges Pulver erhalten. Die Röntgen beugungsanalyse eines bei 125° C nachgetrockneten Pulvers ergab die Interferenzmaxima des β-LiAlO₂. Kalzinieren bei höheren Temperaturen führte zum α-LiAlO₂ bzw. oberhalb 850° C zum γ-LiAlO₂. Die Pulver blieben auch nach dem Kalzinieren sehr feinteilig und zur pulvermetallurgischen Formgebung durch Pressen und Sintern geeignet. Ein Verkrusten der Pulver oder Aufschmelzen wurde nicht beobachtet; das Aufmahlen der Pulver ist nicht notwendig.

Beispiel 3

Herstellung von Alkalisilikat

Zur Darstellung der Alkalisilikate wurden wiederum stöchiometrische Mengen des jeweiligen Hydroxids und "Aerosil" (SiO₂) in Methanol suspendiert und für etwa 3 - 5 Stunden im Rückfluß gekocht. Die hergestellten Pulver waren wiederum sehr feinteilig und extrem fließfähig. Zur Herstellung gut kristallisierter Produkte der Verbindungen Li₂SiO₄, Na₄SiO₄ und K₂SiO₃ wurden nur Kalzinationstemperaturen von bis zu 250° C benötigt. Bereits nach dem Trocknen waren die Produkte Na₄SiO₄ und K₂SiO₃ in Wasser rückstandsfrei lösbar. Das Lithiumorthosilikat, Li₄SiO₄, kristallisierte entsprechend der Röntgenbeugungsanalyse bei 400° - 500° C. Auch hier wurde kein Verkrusten der Pulver oder ein Aufschmelzen beobachtet. Das Li₄SiO₄-Pulver blieb nch dem Kalzinieren sehr feinteilig und zur pulvermetallurgischen Formgebung ohne vorheriges Aufmahlen geeignet. Das Eukryptitpulver, LiAlSiO₄ wurde aus einem stöchiometrischen Ansatz von LiOH, "Aerosil" (SiO₂) und Al(OH)₃ bzw. AlO(OH) suspendiert in Methanol nach etwa vierstündigem Sieden im Rückfluß gewonnen. Zur Erzeugung eines gut kristallisierten Produktes waren hier Kalzinationstemperaturen von etwa 750° C notwendig. Auch hier blieben die Pulver sehr feinteilig und zeigten kein Verkrusten oder Aufschmelzen. Das Röntgenbeugungsdiagramm zeigte bis zur Kristallisation des β-Eukryptits ein röntgenamorphes Verhalten der Pulver. Kristallisiertes Al₂O₃ oder Al(OH)₃ wurden als Zwischenphasen nicht beobachtet. Offenbar ist die Silikatstruktur des Eukryptits bereits bei deutlich geringeren Temperaturen angelegt.

Beispiel 4

Herstellung von Lithiumtitanat, $Li_2TiO_3$ und Lithiumzirkonat, $Li_2ZrO_3$:

Lithiummetatitanat, $Li_2TiO_3$, und Lithiummetazirkonat, $Li_2ZrO_3$, wurden aus einem stöchiometrischen Ansatz von LiOH und Titansäure, $TiO_2.nH_2$, bzw. Zirkonsäure, $ZrO_2 .nH_2O$, suspendiert in Methanol nach etwa fünfstündigem Sieden im Rückfluß gewonnen. Die Metallsäuren wurden durch Hydrolyse des Titanisopropylats, $(C_3H_7O)_4Ti$, bzw. des Zirkonpropylats, $(C_3H_7O)_4Zr$, hergestellt. Das $Li_2TiO_3$ ergab nach dem Kalzinieren bei 500° C bereits ein hinreichend gut kristallisiertes Material. Bei niedrigeren Temperaturen war das Pulver röntgenamorph; freies LiOH wurde nicht beobachtet. Ein Verkrusten der Pulver oder Aufschmelzen trat während des Kalzinierens nicht ein. Die Pulver blieben feinteilig und damit ohne weitere Mahlprozesse zur pulvermetallurgischen Formgebung geeignet.

Auch das Pulver aus dem $Li_2ZrO_3$-Ansatz war nach dem Trocknen sehr feinteilig und extrem fließfähig. Bei niederen Temperaturen (125° C) kristallisierte hier jedoch zunächst LiOH aus. Bei Temperaturerhöhung auf 500° C reagierte das LiOH ohne zu schmelzen ($T_M$(LiOH) = 450° C) unter Bildung einer röntgenamorphen Phase. Daneben waren Anteile von $ZrO_2$ (tetragonale Phase) vorhanden. Oberhalb 750° C kristallisierte das $Li_2ZrO_3$. Auch hier war zur pulvermetallurgischen Formgebung kein Aufmahlen der Pulver notwendig.

Beispiel 5

Herstellung von Erdalkalialuminaten

Zur Darstellung des Magnesiumaluminats, $MgAl_2O_4$, und des Calciumaluminats, $CaAl_2O_4$, wurden wasserfreies $Mg(OH)_2$ bzw. $Ca(OH)_2$ und $Al(OH)_3$ oder AlO(OH) in stöchiometrischen Anteilen in Methanol suspendiert und für etwa 4 - 5 Stunden im Rückfluß gekocht. Hierbei entstanden wiederum sehr feinteilige, fließfähige Pulver.

Bei der Herstellung der Erdalkaliverbindungen kommt die abnehmende Basizität der Hydroxide verglichen mit den Alkalihydroxiden und mit abnehmendem Atomgewicht innerhalb der Erdalkaligruppe deutlich zum Ausdruck. So kristallisiert bei niederen Temperaturen zunächst das $Mg(OH)_2$ aus, welches oberhalb 350° C unter Wasserabgabe zu MgO umgeformt wird. Oberhalb 750° C beginnt dann das $MgAl_2O_4$ zu kristallisieren. Aber auch nach Kalzinationstemperaturen von 1000° C sind noch deutliche Anteile von MgO vorhanden. $Al(OH)_3$- oder $Al_2O_3$-Phasen wurden nicht beobachtet. Ungeachtet der hohen Kalzinationstemperaturen waren die Pulver auch nach der Glühung bei 1000° C sehr feinteilig und sinterfähig.

Bei der Herstellung des Calciumaluminats, $CaAl_2O_4$, liegt bei niederen Temperaturen (125° C) in sehr gut kristallisiertes Produkt vor. Mit steigender Temperatur zerfällt diese Verbindung. Nach einer Kalzination bei 1000° C wurde ein Gemisch unterschiedlicher Aluminatphasen beobachtet. Die Pulver blieben auch hier wieder sehr feinteilig.

Beispiel 6

Herstellung von Erdalkalisilikaten

Wie bei den Aluminaten wurden zur Herstellung der Erdalkalisilikate jeweils stöchiometrische Ansätze von Erdalkalihydroxid ($Mg(OH)_2$, $Ca(OH)_2$, $Ba(OH)_2 .8H_2O$) und "Aerosil" ($SiO_2$) in Methanol suspendiert und 3 - 5 Stunden im Rückfluß gekocht. Nach dem Trocknen wurden auch hier sehr feinteilige und fließfähige Pulver erhalten.

Entsprechend der Basizität des $Ba(OH)_2$ entstand bei dem Ansatz zur Herstellung des $BaSiO_3$ schon bei niederen Temperaturen die Silikatstruktur. Trotz des niederen Schmelzpunktes des Ba(OH). $8 H_2O$ ($T_M$($Ba(OH)_2 .8H_2O$ = 78° C, Zersetzung zum BaO bei 780° C) wurde kein Verkrusten oder Aufschmelzen der Pulver beobachtet. Nach dem Kalzinieren bei 500° C lag entsprechend der Röntgenbeugungsanalyse ein Gemisch von $\alpha$-und $\beta$-$BaSiO_3$ vor. Nach Glühungen oberhalb 750° C wurde reines $\alpha$-$BaSiO_3$ als feinteiliges, sehr fließfähiges Pulver erhalten.

Entsprechend der erheblich geringeren Basizität des $Ca(OH)_2$ kristallisierte zunächst nach dem Trock-

5

nen der Calciumsilikatansätze das $Ca(OH)_2$ aus. Bei Kalzinationstemperaturen oberhalb 750° C wurde ein Gemisch von Calciumsilikatphasen beobachtet.

Ähnliche Ergebnisse wurden mit den Magnesiumsilikatansätzen erzielt. Nach Kalzinationstemperaturen oberhalb 1000° C wurden entsprechende Silikatphasen neben MgO-Anteilen beobachtet. Nach einer Glühung bei 1250° C lag beim $Mg_2SiO_4$ die Olivinstruktur des Forsterits vor.

Ein Ansatz zur Herstellung des $CaMgSiO_4$ führte nach dem Trocknen der Suspension zunächst zur Kristallisation der Hydroxide ($Mg(OH)_2$, $Ca(OH)_2$); nach einer Glühung bei 250° C lagen die Oxide (MgO, CaO) vor. Bei höheren Kalzinationstemperaturen verschwanden zunächst die Interferenzmaxima des CaO. Oberhalb 1000° C wurden auch hier Silikatstrukturen beobachtet.

Ein ternäres Oxidpulver, 3 $MgO.Al_2O_3.3 SiO_2$, wurde aus einem stöchiometrischen Ansatz von $Mg(OH)_2$, $Al(OH)_3$ bzw. $AlO(OH)$ und "Aerosil" ($SiO_2$), suspendiert in Methanol, etwa 5 Stunden im Rückfluß gekocht und schließlich getrocknet, erhalten. Das feinteilige, fließfähige Pulver zeigte entsprechend der Röntgenbeugungsanalyse noch bei hohen Kalzinationstemperaturen neben Anteilen von MgO nur ein schwach ausgeprägtes Kristallisationsverhalten. $Al(OH)_3$ oder $Al_2O_3$ wurden als kristallisierte Phasen nicht beobachtet. Erst bei deutlich höheren Temperaturen wurden kristallisierte Produkte erhalten. Auch diese Pulver blieben bis zum Beginn des Sinterns sehr feinteilig.

Beispiel 7

Calciumchromat(III), $CaCr_2O_4$

Zur Herstellung des Calciumchromats(III), $CaCr_2O_4$, wurde ein stöchiometrischer Ansatz von $Ca(OH)_2$ und $Cr_2O_3 .n H_2O$, hergestellt durch Fällen aus einer wäßrigen Chrom(III)nitrat-Lösung mit $NH_4OH$, in Methanol suspendiert und etwa 5 Stunden im Rückfluß gekocht. Nach dem Trocknen wurde ein grünes, feinteiliges Pulver erhalten, aus dem nach einer Glühung bei 500° C $Cr_2O_3$ auskristallisiert war. Die Kristallisation von $Ca(OH)_2$ oder CaO wurde nicht beobachtet. Hohe Kalzinationstemperaturen führten schließlich zur Chromitbildung.

Beispiel 8

Herstellung von Bariumtitanat, $BaTiO_3$, und Calciumzirkonat, $CaZrO_3$

Zur Herstellung des Bariumtitanats, $BaTiO_3$, bzw. Calciumzirkonats, $CaZrO_3$, wurden stöchiometrische Ansätze von $Ba(OH)_2. 8 H_2O$ und $TiO_2. n H_2O$, hergestellt durch Hydrolyse von Titanisopropylat, $(C_3H_7O)_4Ti$, bzw. $Ca(OH)_2$ und $ZrO_2. nH_2$, hergestellt durch Hydrolyse von Zirkonpropylat, $(C_3H_7O)_4Zr$, in Methanol suspendiert und 4 - 5 Stunden im Rückfluß gekocht. Die nach dem Trocknen erhaltenen, sehr feinteiligen und fließfähigen Pulver ergaben nach dem Kalzinieren bei Temperaturen oberhalb 750° C die gewünschten Produkte, $BaTiO_3$ bzw. $CaZrO_3$, als feinteilige, sinterfähige Pulver, die zur pulvermetallurgischen Formgebung ohne weitere Mahlprozesse geeignet sind.

Beispiel 9

Herstellung von Aluminiumsilikaten

Zur Herstellung der Aluminiumsilikate wurden jeweils stöchiometrische Ansätze von $Al(OH)_3$ oder $AlO(OH)$ und "Aerosil" ($SiO_2$) in Methanol suspendiert, etwa 5 Stunden im Rückfluß gekocht und schließlich getrocknet.

Nach dem Kalzinieren bei Temperaturen bis zu 1000° C zeigten die Aluminiumsilikatpulver, $Al_2O_3.SiO_2$ und $3 Al_2O_3.2 SiO_2$, ein röntgenamorphes Verhalten. Oberhalb 1250° C begann die Kristallisation zu Silikatphasen; kristallisiertes $Al_2O_3$ wurde nicht beobachtet. Biz zum Beginn des Sinterns blieben die Pulver sehr feinteilig.

Beispiel 10

Herstellung von Aluminiumtitanat

Zur Herstellung des Aluminiumtitanats, $Al_2TiO_5$, wurden stöchiometrische Anteile von $Al(OH)_3$ oder $AlO(OH)$ und $TiO_2.n H_2O$, hergestellt durch Hydrolyse von Titanisopropylat, $(C_3H_7O)_4Ti$, suspendiert in Methanol, 5 Stunden im Rückfluß gekocht und schließlich getrocknet. Das sehr feinteilige, fließfähige Pulver zeigte beim Kalzinieren bis zu Temperaturen oberhalb 500° C ein röntgenamorphes Verhalten. Oberhalb 750° C traten kristallisierte $TiO_2$-Phasen auf. Bei höheren Temperaturen (1250° C) wurde die Kristallisation zum $Al_2TiO_3$ beobachtet. Die Pulver blieben bis zum Beginn des Sinterns sehr feinteilig.

Beispiel 11

Herstellung von Zinkaluminat, $ZnAl_2O_4$

Zinkaluminat, $ZnAl_2O_4$, eine Verbindung aus einem basischen und einem amphoteren Hydroxid, wurde aus einem stöchiometrischen Ansatz von $Zn(OH)_2$, hergestellt aus einer wäßrigen Zinkchloridlösung durch Fällen mit $NH_4OH$, und $Al(OH)_3$ oder $AlO(OH)$, suspendiert in Methanol nach etwa dreistündigem Sieden im Rückfluß, anschließendem Trocknen und Kalzinieren gewonnen. Das so hergestellte Pulver war wiederum sehr feinteilig und fließfähig. Entsprechend der Röntgenbeugungsanalyse lag die Kristallstruktur des $ZnAl_2O_4$ bereits nach einer Glühung bei 500° C vor, ohne daß das Pulver seinen feinteiligen Charakter verloren hatte.

Beispiel 12

Herstellung von Zirkonsilikat, $ZrSiO_4$

Zur Herstellung des Zirkonsilikats, $ZrSiO_4$, wurde ein stochiometrischer Ansatz von $ZrO_2.n H_2O$, hergestellt durch Hydrolyse von Zirkonpropylat, $(C_3H_7O)_4Zr$, und "Aerosil" ($SiO_2$) in Methanol suspendiert, etwa 5 Stunden im Rückfluß gekocht und anschließend getrocknet. Beim Kalzinieren des sehr feinteiligen und fließfähigen Pulvers kristallisierte zunächst $ZrO_2$ (tetragonale Pulver) aus, welches bei etwa 1000° C in die monokline Phase überging, ohne seinen feinteiligen Charakter zu verlieren. Bei Temperaturen oberhalb 1250° C kristallisierte dann das $ZrSiO_4$ bei abnehmenden $ZrO_2$-Anteilen aus.

Tabelle 1: Zusammenstellung der Beispiele zur Herstellung oxidkeramischer Werkstoffpulver

| Hydroxid | $Al(OH)_3$ | $SiO_2$ | $Cr_2O_3 \cdot nH_2O$ | $TiO_2 \cdot nH_2O$ | $ZrO_2 \cdot nH_2O$ |
|---|---|---|---|---|---|
| LiOH | $LiAlO_2$ | $Li_2SiO_3$ $Li_4SiO_4$ | | $Li_2TiO_3$ | $Li_2ZrO_3$ |
| | $LiAlSiO_4$ | | | | |
| NaOH | | $Na_4SiO_4$ | | | |
| KOH | | $K_2SiO_3$ | | | |
| $Mg(OH)_2$ | $MgAl_2O_4$ | $MgSiO_3$ $Mg_2SiO_4$ $3\ MgO \cdot Al_2O_3 \cdot 3SiO_2$ | | | |
| $Ca(OH)_2$ | $CaAl_2O_4$ | $CaSiO_3$ $Ca_2SiO_4$ $CaMgSiO_4$ | $CaCr_2O_4$ | | $CaZrO_3$ |
| $Ba(OH)_2$ | | $BaSiO_3$ | | $BaTiO_3$ | |
| $Al(OH)_3$ | | $Al_2O_3 \cdot SiO_2$ $3\ Al_2O_3 \cdot 2SiO_2$ | | $Al_2TiO_5$ | |
| $Zn(OH)_2$ | $ZnAl_2O_4$ | | | | |
| $Zr(OH)_4$ | | $ZrSiO_4$ | | | |

**Ansprüche**

1. Verfahren zur Herstellung sinterfähiger Pulver für binäre und multinäre, keramische Oxidwerkstoffe, bei welchem die Ausgangssubstanzen in einer alkoholischen Flüssigkeit gelöst und/oder suspendiert werden, bei erhöhter Temperatur zur Bildung des keramischen Pulvers aus den Ausgangssubstanzen zur Reaktion gebracht werden und die alkoholische Flüssigkeit entfernt wird, dadurch gekennzeichnet, daß

a) als Ausgangssubstanzen entweder

aa) eine Kombination mindestens eines in Wasser sauer reagierenden Stoffes mit mindestens einem in Wasser alkalisch reagierenden Reaktionspartner oder

ab) eine Kombination mindestens eines amphoteren Stoffes mit mindestens einem in Wasser alkalisch reagierenden Reaktionspartner oder

ac) eine Kombination mindestens eines in Wasser sauer reagierenden Stoffes mit mindestens einem amphoteren Reaktionspartner verwendet wird,

b) mindestens einer der Stoffe oder der Reaktionspartner in einer solchen Kombination mit mindestens einem der in der alkoholischen Flüssigkeit vorhandenen Alkohole verestert wird und mit dem anderen Reaktionspartner eine Verbindung eingeht, wonach die entstandene Verbindung in der Flüssigkeit suspendiert vorliegt und

c) die Verbindung durch Wärmezufuhr zur Suspension sowohl von der Flüssigkeit getrennt als auch in das keramische Pulver oder ein Vorprodukt überführt wird.

2. Verfahren nach Anspruch 1, dadurch gekennzeichnet, daß die Abtrennung der Verbindung von der Flüssigkeit und die Überführung in das keramische Pulver oder ein festes Vorprodukt gleichzeitig und durch Versprühen erfolgt.

3. Verfahren nach Anspruch 1, dadurch gekennzeichnet, daß

a) als alkoholische Flüssigkeit Methanol verwendet wird und

b) nach Bildung der Verbindung das Methanol unter gleichzeitiger Wasserzufuhr abdestilliert wird und

c) die entstehende wäßrige Suspension versprüht wird.

4. Verfahren nach Anspruch 1, dadurch gekennzeichnet, daß die Überführung eines Vorprodukts in das keramische Pulver durch Kalzination der abgetrennten Verbindung unterhalb des Schmelzpunktes des niedrigstschmelzenden Reaktionspartners erfolgt.

```
┌─────────────────┐   ┌─────────────────┐   ┌──────────────────────┐
│ Alkohol         │   │ Hydroxid        │   │ amphotes Hydroxid    │
│ z. B. CH₃OH     │   │ z. B. LiOH      │   │ Metallsäure oder     │
│                 │   │                 │   │ "Aerosil" (SiO₂)     │
│                 │   │                 │   │ z. B. "Aerosil"      │
└─────────────────┘   └─────────────────┘   └──────────────────────┘
```

Alkohol z. B. $CH_3OH$

Hydroxid z. B. LiOH

amphotes Hydroxid Metallsäure oder "Aerosil" ($SiO_2$) z. B. "Aerosil"

Alkoholische Suspension z. B. 0,5 bis 1 mol/l

Sieden im Rückfluß z. B. 70 bis 75° C

(org. Si-Phase).$Me_xOH$
z. B. (org. Si-Phase). 4 LiOH

Alkohol Rückgew.

Abdestillieren des Alkohols unter Wasserzugabe

$H_2O$

Sprühtrocknen in geschl. Anlagen

Sprühtrocknen in normaler Anlage

$H_2O$

Kalzination z. B. $Li_4SiO_4$

$H_2O, CO_2$

Formgebung durch Pressen und Sintern